# EUROPEAN PATENT SPECIFICATION

(11) **EP 2 466 979 B1**
(45) Date of publication and mention of the grant of the patent: **23.10.2019**
(21) Application number: 10807988.0
(22) Date of filing: 12.08.2010
(51) Int. Cl.: H04W 8/26

(54) **A METHOD, SYSTEM AND DEVICE FOR USING USER EQUIPMENT (UE) IDENTITY**
VERFAHREN, SYSTEM UND VORRICHTUNG ZUR VERWENDUNG VON BENUTZERGERÄTE-IDENTITÄT
PROCÉDÉ, SYSTÈME ET DISPOSITIF D'UTILISATION D'IDENTIFIANT D'ÉQUIPEMENT UTILISATEUR

(30) Priority: 14.08.2009 CN 200910091263
(43) Date of publication of application: 20.06.2012
(73) Proprietor: China Academy of Telecommunications Technology, Haidian District, Beijing 100191 (CN)
(72) Inventor: ZHAO, Yi, Beijing 100083 (CN); LIANG, Jing, Beijing 100083 (CN); LI, Haitao, Beijing 100083 (CN)
(74) Representative: Lantos, Mihaly
(86) International application number: PCT/CN2010/075944
(87) International publication number: WO 2011/018043

(56) References cited:
- EP-A1- 2 429 242
- WO-A1-2009/082333
- CN-A- 101 384 074
- CN-A- 101 478 822
- US-A1- 2009 186 613
- ZTE: "Management of Component Carriers in CONNECT", 3GPP DRAFT; R2-093884 MANAGEMENT OF COMPONENT CARRIERS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Los Angeles, USA; 20090629 - 20090703, 23 June 2009 (2009-06-23), XP050604578, [retrieved on 2009-06-23]
- "3rd Generation Partnership Project; Technical Specification Group Radio Access Network; Evolved Universal Terrestrial Radio Access (E-UTRA) Medium Access Control (MAC) protocol specification (Release 8)", 3GPP STANDARD; 3GPP TS 36.321, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V8.6.0, 1 June 2009 (2009-06-01), pages 1-44, XP050377622,
- PANASONIC: "Synchronization channel and system information for Carrier Aggregation", 3GPP DRAFT; R2-092866_CARRIER_AGGREGATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. San Francisco, USA; 20090428, 28 April 2009 (2009-04-28), XP050340683, [retrieved on 2009-04-28]

## Description

### FIELD OF THE PRESENT INVENTION

The present invention relates generally to the field of wireless communication technology, and more particularly to a method, system and device for using a user equipment identity.

### BACKGROUND OF THE PRESENT INVENTION

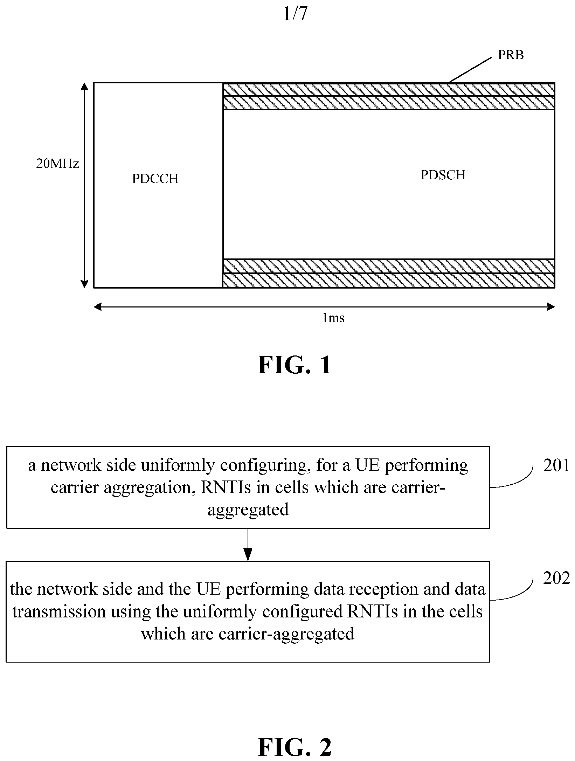

In a LTE system, PRBs (Physical Resource Blocks) corresponding to resource scheduling information (e.g.: MCS (Modulation and Coding Scheme)) in uplink and downlink are sent on a PDCCH (Physical Downlink Control Channel). Therefore, it is necessary to distinguish the resource scheduling information is for a paging message, or is for a system message, or is for a scheduling information related to data of a user equipment on a PDSCH (Physical Downlink Shared Channel) or the PUSCH, as shown in FIG. 1. Currently, different RNTIs (Radio Network Temporary Identities) configured for different scheduling information are used, which are included in processes such as random access of a user equipment, cell handover, normal data reception and data transmission, and carrier aggregation. The cell handover between eNBs (Evolved Node-B) need interaction through signaling on an X2 or S1 interface, a process of which is as follow: a source cell sends a handover-request message to a target cell; a target cell returns a handover-request response message to the source cell (the handover-request response message comprises a handover command which the source cell sends to the user equipment); the source cell sends the handover command to the user equipment; and the user equipment makes configuration according to the handover command, and sends a handover completion message to the target cell when the configuration is finished. The handover command which the source cell sends to the user equipment is a RRC (Radio Resource Control) connection reconfiguration message including mobility control information. The handover completion message which the user equipment sends to the target cell is a RRC connection reconfiguration completion message. In the LTE system, the user equipment also needs to make handover between cells in the same eNB when it moves among the cells. Different from the cell handover between eNBs, the source cell and the target cell need not to interact with each other through the signaling on the X2 interface or the S1 interface. Other processes are similar, i.e.: the source cell sends the handover command to the user equipment ; the user equipment makes configuration according to the handover command, and sends the handover completion message to the target cell when the configuration is finished.

In general, when the user equipment performs reception, it detects firstly whether any RNTI which needs to be received exits on the PDCCH. If yes, it receives corresponding data according to indication in a corresponding DCI (Downlink Control Information). A P-RNTI (Paging RNTI) corresponds to paging information; a SI-RNTI (System Information RNTI) corresponds to system information; a C-RNTI (Cell Radio Network Temporary Identifier) corresponds to user equipment information on the PDSCH and the PUSCH; a SPS C-RNTI (Semi-Persistent Scheduling C-RNTI) corresponds to semi-persistent scheduling information of the user equipment; a TPC-PUSCH-RNTI (Transmission Power Control PUSCH RNTI) and a TPC-PUCCH-RNTI correspond to power control information on the PUSCH and the PUCCH. A Temporary C-RNTI is only a temporary user equipment identity which a network configures for a user equipment in case that the user equipment does not have the C-RNTI. After the user equipment is in a connected state through a random access process, the user equipment sets the Temporary C-RNTI configured by the network as its own C-RNTI. A RA-RNTI is different from the above RNTIs. The above RNTIs are used to indicate an identity of the user equipment, but the RA-RNTI is used to identify resource blocks which the user equipment used when sending preambles in the random access process. In the above RNTIs, the C-RNTI and the SPS C-RNTI correspond to a single user equipment. The C-RNTI is used to uniquely identify one user equipment in a RRC connected state in a cell. When the user equipment detects its corresponding C-RNTI on the PDCCH, the user equipment receives or sends data on locations of resources indicated in (or associated with) the DCI corresponding to the C-RNTI. The SPS C-RNTI has similar usage with the C-RNTI, but a user equipment is configured with the SPS C-RNTI only when the user equipment uses the Semi-Persistent Scheduling.

In 3GPP TSG-RAN WG2 Meeting #66bis Los Angeles, USA, June 29-July 3, 2009, Management of Component Carriers in CONNECT sourced from ZTE is discussed, in which the following proposals 1-4 are given: 1) C-RNTI allocated for PDCCHs of different component carriers respectively; 2) RNTI(s) allocation is performed by dedicated signaling; 3) RNTI(s) assignment could be delivered by dedicated RRC signaling; 4) PDSCH carriers and PDCCH carriers could be configured separately.

WO 2009/082333 A1 discloses a method and an arrangement in a radio network node in a mobile telecommunications network supporting multiple configurations associated with radio resource management is provided, in which each configuration of the multiple configurations is associated with an identifier of a predetermined type (i.e., Radio Network Temporary Identifier (RNTI)), and one configuration is activated by sending, out-band on a downlink control channel, an identifier of the predetermined type identifying said configuration to be activated.

EP 2429242 A1 discloses a method and a device for allocating carriers in carrier aggregation system. The method comprises: a network side allocating a component carrier and identifier information of a user equipment to the user equipment, and notifying the user equipment of the allocated component carrier and the identifier information of the user equipment, and/or a corresponding relationship between the allocated downlink component carrier and the identifier information of the user equipment.

During devising the present invention, inventors find that there are at least the following problems in prior art.

In the LTE system, a user equipment receives and sends data with only one cell at the same time. Each cell configures RNTIs such as the C-RNTI, the SPS C-RNTI, and so on, for the user equipment in the cell. The user equipment receives scheduling information from a network side by detecting RNTIs on the PDCCHs. In a LTE-A system, when there are multiple cells which may be carrier-aggregated, the user equipment which enables carrier aggregation can communicate with the multiple cells at the same time. In such a case, it is not known how the user equipment receives scheduling information from the multiple cells through RNTIs.

### SUMMARY OF THE PRESENT INVENTION

The object of the present invention is achieved by the features of the appended independent claims.

The embodiments of the present invention provide a method, a system, and a device for using a user equipment identity, so that a user equipment enabling carrier aggregation performs data reception and data transmission with cells through RNTIs.

The embodiments of the present invention provide a method for using a user equipment identity. The method comprises: a network side configuring uniformly, for a user equipment performing carrier aggregation, radio network temporary identities (RNTIs) in a plurality of cells which are carrier-aggregated; and the user equipment and the network side performing data reception and data transmission using the uniformly configured RNTIs in the plurality of cells which are carrier-aggregated.

The embodiments of the present invention provide a system for using a user equipment identity. The system comprises a network side and a user equipment. The network side configures uniformly, for the user equipment performing carrier aggregation, radio network temporary identities (RNTIs) in a plurality of cells which are carrier-aggregated, and performs data reception and data transmission with the user equipment using the uniformly configured RNTIs in the plurality of cells which are carrier-aggregated. The user equipment receives the uniformly configured RNTIs which the network side configures for the user equipment, and performs data reception and data transmission with the network side using the uniformly configured RNTIs in the plurality of cells which are carrier-aggregated.

The embodiments of the present invention provide a network side device. The network side device comprises: a configuration module, for configuring uniformly, for a user equipment performing carrier aggregation, RNTIs in a plurality of cells that are carrier-aggregated; and a transceiver module, for performing data reception and data transmission with the user equipment using the uniformly configured RNTIs in the plurality of cells which are carrier-aggregated.

In the embodiments of the present invention, the network side configures, for a user equipment performing carrier aggregation, and communicates with the user equipment according to the configured user equipment identity, such that the user equipment enabling carrier aggregation performs data reception and data transmission with carrier-aggregated cells through RNTIs. Of course, any product described in the embodiments of the present invention does not necessarily include all of the above features.

### BRIEF DESCRIPTION OF THE DRAWINGS

Figure 1 is a structural schematic diagram of a channel in a physical layer in prior art.
Figure 2 is a flow diagram of a method for using a user equipment identity in an embodiment of the present invention.
Figure 3 is a flow diagram of a method for using a user equipment identity in another example of the present invention.
Figure 4 is a flow diagram of a method for using a user equipment identity in another example of the present invention.
Figure 5 is a structural schematic diagram of a network architecture of a LTE system in prior art.
Figure 6 is a flow diagram of a method for using a user equipment identity in another embodiment of the present invention.
Figure 7 is a flow diagram of a method for using a user equipment identity in another example of the present invention.
Figure 8 is a schematic diagram of a configuration of RNTIs for UEs in cells which are carrier-aggregated in an embodiment of the present invention.
Figure 9 is a network side device in an embodiment of the present invention.
Figure 10 is a user equipment in an example of the present invention.

### DETAILED DESCRIPTION OF THE EMBODIMENTS OF THE PRESENT INVENTION

To solve the above problems in prior art, in embodiment of the present invention, a base station configures a user equipment identity for a user equipment which enables carrier aggregation; the base station communicates with the user equipment according to the user equipment identity.

Embodiments of the present invention will be clearly and completely described in conjunction with the following drawings. Obviously, the following embodiments are only a part, but not all, of the embodiments of the present invention. All other embodiments obtained by one of ordinary skills in the art based on the embodiments of the present invention without creative labor fall into a protection scope of the present invention.

An embodiment of the present invention provides a method for using a user equipment identity. As shown in FIG. 2, the method comprises the following steps 201 and 202.

Step 201: a network side uniformly configuring, for a UE (User Equipment) performing carrier aggregation, RNTIs in a plurality of cells which are carrier-aggregated.

Step 202: the network side and the user equipment performing data reception and data transmission using the uniformly configured RNTIs in the plurality of cells which are carrier-aggregated.

In the embodiment of the present invention, the network side configures a user equipment identity for a user equipment performing carrier aggregation, and network side communicates with the user equipment according to the configured user equipment identity, such that the user equipment performing carrier aggregation performs, through RNTIs, data reception and data transmission with each cell that is carrier-aggregated.

A device at the network side (or a network side device) comprises a base station, an eNB and other entities, but is not limited thereto. All devices capable of uniformly configuring RNTIs at network side for a plurality of cells which are carrier-aggregated fall into a protection scope of the present invention. The embodiment of the present invention is described by an example that the network side device is the base station.

The embodiment of the present invention will be described further in combination with specific scenarios.

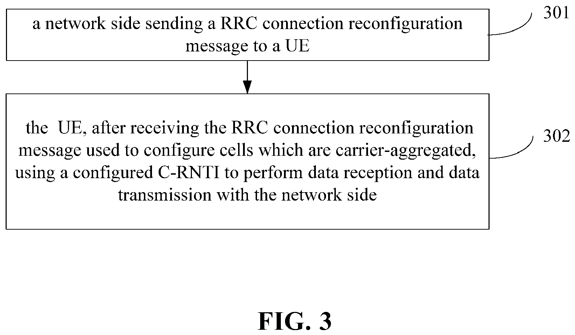

Another example of the present invention provides a method for using a user equipment identity. The method describes how a user equipment in a connected state uses a C-RNTI and/or a SPS C-RNTI during configuring cells which are carrier-aggregated. As shown in FIG. 3, the method comprises the following steps 301 and 302.

Step 301: a network side sending a RRC connection reconfiguration message to a user equipment, wherein the message carries frequency information or frequency information indices of a plurality of cells which are carrier-aggregated, and the RRC connection reconfiguration message is used to configure the plurality of cells for the user equipment.

Step 302: the user equipment, after receiving the RRC connection reconfiguration message used to configure the cells which are carrier-aggregated, using a configured C-RNTI to perform data reception and data transmission with the network side in all of the plurality of cells which are carrier-aggregated.

In the embodiment of the present invention, a base station configures a user equipment identity for a user equipment performing carrier aggregation, and the base station communicates with the user equipment according to the configured user equipment identity, such that the user equipment enabling carrier aggregation performs data reception and data transmission with a plurality of cells through RNTIs. It should be further noted that, a carrier aggregation system may further comprise an activation process for the cells which are carrier-aggregated, i.e., after the above configuration process is finished, the user equipment may not perform data reception and data transmission with the network side in the carrier-aggregated cells; only after the carrier-aggregated cells have been activated, the user equipment may perform data reception and data transmission with the carrier-aggregated cells having been activated. A RRC signaling may be used by the network side to activate the carrier-aggregated cells for the user equipment, or signaling in other protocol layers such as MAC CE may also be used. When the activation process for the carrier-aggregated cells is done, the user equipment, after receiving activation signaling for the carrier-aggregated cells, uses a configured C-RNTI to perform data reception and data transmission with the network side in all of the plurality of cells which are carrier-aggregated.

It should be noted that, the SPS C-RNTI has similar usage with the C-RNTI, but a user equipment is configured with the SPS C-RNTI only when the user equipment uses the semi-persistent scheduling.

In the embodiment of the present invention, a base station configures a user equipment identity for a user equipment performing carrier aggregation, and the base station communicates with the user equipment according to the configured user equipment identity, such that the user equipment enabling carrier aggregation performs, through RNTIs, data reception and data transmission with each cell which is carrier-aggregated.

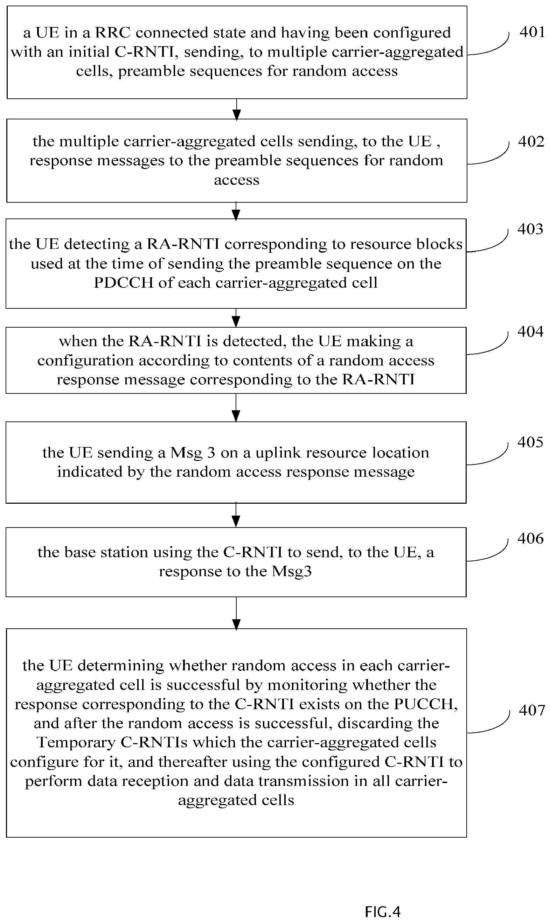

Another example of the present invention provides a method for using a user equipment identity. The method describes a process in which the user equipment in a connected state uses a contention-based random access to access other cells which are carrier-aggregated. The following embodiment is exemplified by an example that the user equipment accesses simultaneously multiple other cells which are carrier-aggregated. As shown in FIG. 4, the method comprises the following steps S401 to S407:
Step 401: the user equipment in a RRC connected state and having been configured with an initial C-RNTI, sending, to the multiple carrier-aggregated cells, preamble sequences for random access.
Step 402: the multiple carrier-aggregated cells sending, to the user equipment, response messages to the preamble sequences for random access.

Each of the response messages to the preamble sequences for random access sent by the carrier-aggregated cells to the user equipment comprises: uplink resource configuration information, timing adjustment information, an identification number of one of the preamble sequences for random access, a Temporary C-RNTI configured for the user equipment by each of the carrier-aggregated cells, and so on.

It should be noted that, the base station configures different Temporary C-RNTIs for the UE which accesses simultaneously the multiple carrier-aggregated cells, and the Temporary C-RNTIs configured in each cell is different from the RNTIs currently configured by system.

Step 403: the UE detecting a RA-RNTI corresponding to resource blocks used at the time of sending the preamble sequence on the PDCCH of each carrier-aggregated cell.

Step 404: when the RA-RNTI is detected, the UE making a configuration according to contents of a random access response message corresponding to the RA-RNTI.

Step 405: the UE sending a Msg 3 on a uplink resource location indicated by the random access response message. The Msg 3 carries a C-RNTI MAC control information used to notifying an identity of the UE to the network, so as to resolve the contention.

Step 406: the base station using the C-RNTI to send, to the UE, a response (i.e. a contention resolution message) to the Msg3.

Step 407: the UE determining whether random access in each carrier-aggregated cell is successful by monitoring whether the response corresponding to the C-RNTI exists on the PUCCH, and after the random access is successful, discarding the Temporary C-RNTIs which the carrier-aggregated cells configure for it, and thereafter using the configured C-RNTI to perform data reception and data transmission in all carrier-aggregated cells.

In the embodiment of the present invention, the base station configures a user equipment identity for the carrier-aggregated user equipment, and the base station communicates with the user equipment according to the configured user equipment identity, such that the carrier-aggregated UE performs data reception and data transmission with each cell through RNTIs.

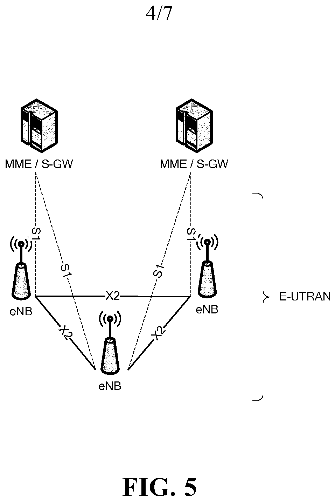

A network architecture of the LTE system is shown in FIG. 5. In the LTE system, network side entities are comprised of a MME (Mobile Management Entity)/S-GW (Serving Gateway) and eNBs. An interface between the eNBs is an X2 interface. An interface between the MME/ S-GW and the eNBs is a S1 interface. In the LTE network, when the UE moves from one eNB to another eNB, a handover is needed so as not to cut current services off. If the X2 interface exists between the eNBs, the handover may be implemented through the X2 interface; and if the X2 interface does not exist between the eNBs, the handover may be implemented through the S1 interface.

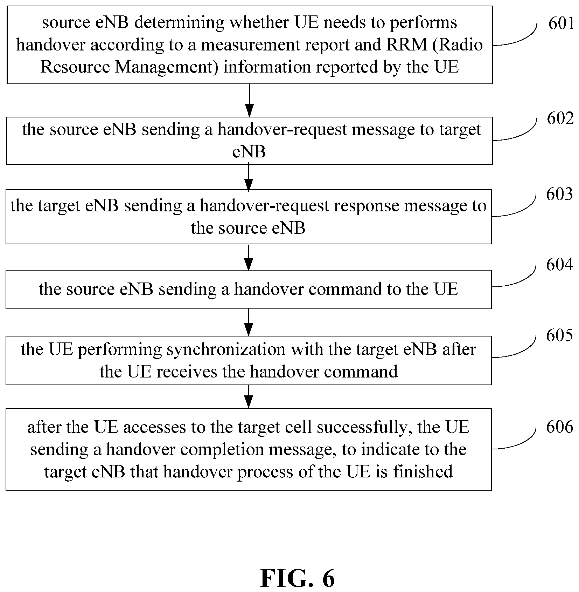

Another embodiment of the present invention provides a method for using a user equipment identity. The method describes a process in which a source eNB and a target eNB implement a handover through an X2 interface. As shown in FIG. 6, the method comprises steps 601-606.

Step 601: the source eNB determining whether the UE needs to performs the handover according to a measurement report and RRM (Radio Resource Management) information reported by the UE.

Step 602: the source eNB sending a handover-request message to the target eNB.

The source eNB sends the handover-request message to the target eNB, the handover-request message includes information that the UE needs to perform the handover to the target eNB, for example: context information of the UE in the source eNB, and a target cell ID, and so on.

Step 603: the target eNB sending a handover-request response message to the source eNB.

When resources to be used by the UE performing the handover are permitted in the target eNB, the target cell will configure corresponding resources for the UE and send the handover-request response message to the source eNB. The handover-request response message comprises parameter information needed by the UE to perform the handover to the target eNB, for example, the RNTIs which the target eNB configures for the UE, system information of the target eNB, preamble information when the UE performs random access in the target eNB.

If the target eNB configures a plurality of carrier-aggregated cells for the UE, because the UE uses the same C-RNTI and the same SPS C-RNTI in the plurality of carrier-aggregated cells and performs transmission power control through the TPC-PUSCH-RNTI and the TPC-PUCCH-RNTI, the handover-request response message includes the C-RNTI the the SPS C-RNTI, the TPC-PUSCH-RNTI and the TPC-PUCCH-RNTI which the target eNB configures for the UE, as well as frequency information or frequency information indices of the plurality of carrier-aggregated cells. Since the UE uses the same C-RNTI and the same SPS C-RNTI (TPC-RNTI) to perform data reception and data transmission in all of the plurality of carrier-aggregated cells, only one C-RNTI (and SPS C-RNTI) is needed. Since the UE may use the same TPC-PUSCH-RNTI and the same TPC-PUCCH-RNTI or respective TPC-PUSCH-RNTIs and TPC-PUCCH-RNTIs in different ones of the plurality of carrier-aggregated cells, the number of TPC-PUSCH-RNTIs and the number of TPC-PUCCH-RNTIs will be determined on a case-by-case basis. If all of the cells which are carrier-aggregated use the same TPC-PUSCH-RNTI and the same TPC-PUCCH-RNTI, then only one TPC-PUSCH-RNTI and one TPC-PUCCH-RNTI are needed; if all of the cells which are carrier-aggregated use different TPC-PUSCH-RNTIs and different TPC-PUCCH-RNTIs, then respective TPC-PUSCH-RNTIs and respective TPC-PUCCH-RNTIs corresponding to respective cells which are carrier-aggregated are needed. Whether the handover-request response message comprises the SPS C-RNTI, the TPC-PUSCH-RNTI or TPC-PUSCH-RNTIs, and the TPC-PUCCH-RNTI or TPC-PUSCH-RNTI or not will be determined on a case-by-case basis. No SPS C-RNTI will be included if the target eNB does not configure Semi-Persistent Scheduling resources for the UE. The TPC-PUSCH-RNTI and the TPC-PUCCH-RNTI may also be sent by dedicated signaling after the UE has entered the target cell.

Step 604: the source eNB sending a handover command to the UE.

The source eNB sends the handover command to the UE after the source eNB receives the handover-request response message from the target eNB, indicating the UE to hand over to the target eNB. The handover command sent by the source eNB to the UE is comprised in the handover-request response message which the target eNB sends to the source eNB. The handover command comprises the parameter information in step 603 needed by the UE to hand over to the target eNB.

Step 605: the UE performing synchronization with the target eNB after the UE receives the handover command.

Step 606: after the UE accesses to the target cell successfully, the UE sending a handover completion message, to indicate to the target eNB that the handover process of the UE is finished.

It should be noted that the handover process through the S1 interface is similar to the handover process through the X2 interface, but communication between the source eNB and the target eNB is through the MME, thus not repeated herein.

In the embodiment of the present invention, the base station configures the user equipment identity for the user equipment performing carrier aggregation, and communicates with the user equipment according to the configured user equipment identity, so as to the UE enabling carrier aggregation performs data reception and data transmission with each cell through RNTIs.

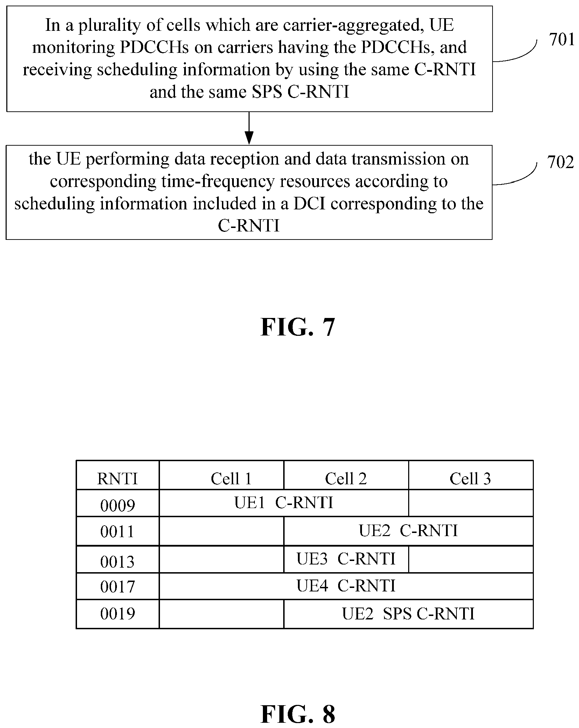

Another example of the present invention provides a method for using a user equipment identity. As shown in FIG. 7, the method comprises steps 701 to 702.

Step 701: in a plurality of cells which are carrier-aggregated, a user equipment (UE) monitoring PDCCHs on carriers having the PDCCHs, and receives scheduling information by using the same C-RNTI and the same SPS C-RNTI.

As shown in FIG. 8, FIG. 8 is a schematic diagram of configurations for RNTIs of a UE in a plurality of cells which are carrier-aggregated. The figure shows that each UE uses the same C-RNTI and the same SPS C-RNTI in cells corresponding to aggregated carriers, for example, the C-RNTI for the UE2 in cell 2 and cell 3 that are carrier-aggregated is 0011 and the SPS C-RNTI is 0019 in the cell2 and the cell3.

Step 702: the UE performing data reception and data transmission on corresponding time-frequency resources according to scheduling information included in a DCI corresponding to the C-RNTI.

In the embodiment of the present invention, the base station configures a user equipment identity for the user equipment performing carrier aggregation, and communicates with the user equipment according to the configured user equipment identity, so that the UE enabling carrier aggregation performs data reception and data transmission with each cell through RNTIs.

The embodiment of the present invention provides a system for using a user equipment identity, which comprises a network side and a user equipment (UE).

The network side configures uniformly, for the UE performing carrier aggregation, RNTIs in a plurality of cells which are carrier-aggregated; and performs data reception and data transmission with the UE using the uniformly configured RNTIs in the plurality of cells which are carrier-aggregated.

The UE receives the uniformly configured RNTIs which the network side configures for the UE, and performs data reception and data transmission with the network side using the uniformly configured RNTIs in the plurality of cells which are carrier-aggregated.

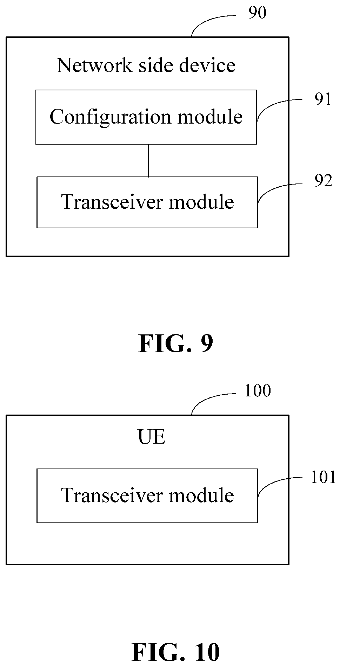

The embodiment of the present invention provides a network side device 90. As shown in FIG. 9, the network side device 90 comprises a configuration module 91 and a transceiver module 92.

The configuration module 91 is used for configuring uniformly, for a UE performing carrier aggregation, RNTIs in a plurality of cells which are carrier-aggregated.

The transceiver module 92 is used for performing data reception and data transmission with the UE using the RNTIs uniformly configured by the configuration module 91 in the plurality of cells which are carrier-aggregated.

Uniformly configuring RNTIs comprises sharing RNTI resources among the plurality of cells which are carrier-aggregated.

The configuration module 91 is used for: a network side configuring uniformly a C-RNTI, and/or a SPS C-RNTI, and/or a TPC-PUSCH-RNTI, and/or a TPC-PUCCH-RNTI for the UE in the plurality of cells which are carrier-aggregated.

A network side configuring uniformly a C-RNTI, and/or a SPS C-RNTI, and/or a TPC-PUSCH-RNTI, and/or a TPC-PUCCH-RNTI for the UE in the plurality of cells which are carrier-aggregated, comprises: the network side configuring the same C-RNTI for the UE in different ones of the plurality of cells which are carrier-aggregated, wherein the configured C-RNTI is different from RNTIs having been configured by the network side; and/or, the network side configuring the same SPS C-RNTI for the UE in different ones of the plurality of cells which are carrier-aggregated, wherein the configured SPS C-RNTI is different from the RNTIs having been configured by the network side.

The network side configuring uniformly a C-RNTI, and/or a SPS C-RNTI, and/or a TPC-PUSCH-RNTI, and/or a TPC-PUCCH-RNTI for the UE in the plurality of cells which are carrier-aggregated, comprises: the network side configuring the same TPC-PUSCH-RNTI or different TPC-PUSCH-RNTIs for the UE in different ones of the plurality of cells which are carrier-aggregated, wherein the configured TPC-PUSCH-RNTI or the configured TPC-PUSCH-RNTIs are different from the RNTIs having been configured by the network side; and/or the network side configuring the same TPC-PUCCH-RNTI or different TPC-PUCCH-RNTIs for the UE in different ones of the plurality of cells which are carrier-aggregated, wherein the configured TPC-PUCCH-RNTI or the configured TPC-PUCCH-RNTIs are different from the RNTIs having been configured by the network side.

When there are simultaneous random accesses in the plurality of cells, the configuration module 91 is further used for: configuring different Temporary C-RNTIs for UE making simultaneous random accesses in each carrier-aggregated cell, wherein the configured Temporary C-RNTIs are different from the RNTIs having been configured by the network side.

The transceiver module 92 is used for: the network side performing data reception and data transmission with the UE using the same C-RNTI and/or the same SPS C-RNTI in different cells that are carrier-aggregated.

The transceiver module 92 is further used for: the network side sending power control information to the UE using the configured TPC-PUSCH-RNTI and the configured TPC-PUCCH-RNTI in all of the plurality of cells which are carrier-aggregated.

The network side performing data reception and data transmission with the UE using the same C-RNTI and/or the same SPS C-RNTI in different cells that are carrier-aggregated, comprises: not configuring new C-RNTIs and/or SPS C-RNTIs for the UE any more when configuring carrier aggregation by the network side; and/or, not configuring new C-RNTIs and/or SPS C-RNTIs for the UE any more when configuring and activating the carrier aggregation by the network side; and the UE performing data reception and/or data transmission with the network side using the configured C-RNTI and/or the configured SPS C-RNTI in all cells which are carrier-aggregated.

When the user equipment hands over from a source node at the network side to a target node at the network side, the handover-request response message sent from the target node at the network side to the source node at the network side comprises the RNTIs and the frequency information or frequency information indices of other carrier-aggregated cells configured by the target node at the network side for the UE; and the handover command message sent from the source node at the network side to the UE comprises the RNTIs and the frequency information or frequency information indices of other carrier-aggregated cells configured by the target node at the network side for the UE.

The RNTIs configured by the target node at the network side for the UE comprises: a unique C-RNTI and/or a unique SPS C-RNTI configured by the target node at the network side for the UE.

When the UE is in a RRC connected state, the UE makes random access to the carrier-aggregated cells, and after the contention is resolved, the UE uses the configured C-RNTI to perform data reception/data transmission, and discards Temporary C-RNTIs configured by the carrier-aggregated cells.

The example of the present invention provides a UE 100. As shown in Fig. 10, the UE 100 comprises a transceiver module 101. The transceiver module 101 is used to receive the RNTIs configured uniformly by the network side for the UE; and perform data reception and data transmission with the network side using the uniformly configured RNTIs in the plurality of cells which are carrier-aggregated.

The UE monitors the PDCCHs on carriers having the PDCCHs in the cells which are carrier-aggregated, and uses the same C-RNTI and/or SPS C-RNTI to receive scheduling messages.

The UE monitors the PDCCHs on the carrier having the PDCCHs in the cells which are carrier-aggregated, and uses the configured TPC-PUSCH-RNTI and/or the configured TPC-PUCCH-RNTI to receive power control information.

The embodiment of the present invention, the network side configures, for a user equipment performing carrier aggregation, a user equipment identity, and communicates with the user equipment according to the configured user equipment identity, so that the UE enabling carrier aggregation performs data reception and data transmission with cells through the RNTIs. Of course, any product described in the embodiments of the present invention does not necessarily include all of the above features.

It should be noted that, the embodiments of the present invention describes how to use RNTIs by the UE. However, one of ordinary skills in the art may understand that, other terminals such as a communication terminal in form of machine also fall into the protection scope of the present invention.

It also should be noted that, the embodiments of the present invention are described by examples of using RNTIs, but one of ordinary skills in the art may understand that, in other systems or standards, identities having the same or similar functions with the RNTIs of the embodiment of the present invention are also within the protection scope of the present invention.

Through description of the above embodiments, one of ordinary skills in the art may understand clearly that the present invention may be implemented by software and necessary generic hardware platform. Of course, the present invention may also be implemented by hardware, but in many situations the former is better. Based on this understanding, essences of technical solutions of the present invention or sections of the present invention contributing to prior art may be embodied in a form of software products stored in a storage medium which comprises an amount of instructions causing a terminal device (such as mobile phones, personal computers, servers, or network equipments, etc.) to implement the methods described in the embodiments of the present invention.

The above descriptions are just optional embodiments of the present invention. It should be pointed that, for one of ordinary skills in the art, improvements and embellishments may also be done which also fall into the protection scope of the present invention.

## Claims

1. A method for using a user-equipment identity, comprises:
a network side configuring (201), for a user-equipment performing carrier aggregation, uniform radio network temporary identities RNTIs in a plurality of cells which are carrier-aggregated; and
the network side and the user-equipment performing (202) data reception and data transmission using the uniform RNTIs in activated ones of the plurality of cells which are carrier-aggregated,
wherein the uniform RNTIs are different from RNTIs which the network side has configured for all user-equipments in the plurality of cells before the user-equipment performs the carrier aggregation, and the uniform RNTIs comprise at least one of a Cell Radio Network Temporary Identifier C-RNTI, a Semi-Persistent Scheduling C-RNTI, Transmission Power Control PUSCH RNTIs, and Transmission Power Control PUCCH RNTIs.

2. The method of claim 1, wherein, configuring uniform RNTIs comprises:
sharing available RNTIs among the plurality of cells which are carrier-aggregated.

3. The method of claim 1, wherein, the network side configuring, for the user-equipment, a uniform C-RNTI in the plurality of cells which are carrier-aggregated, comprises: the network side configuring a same C-RNTI for the user-equipment in different ones of the plurality of cells which are carrier-aggregated, the configured C-RNTI being different from the RNTIs which the network side has configured for all user-equipments in the plurality of cells before the user-equipment performs the carrier aggregation; and
the network side configuring a Semi-Persistent Scheduling C-RNTI for the user-equipment in the plurality of cells which are carrier-aggregated, comprises: the network side configuring a same SPS C-RNTI for the user-equipment in different ones of the plurality of cells which are carrier-aggregated, the configured Semi-Persistent Scheduling C-RNTI being different from the RNTIs which the network side has configured for all user-equipments in the plurality of cells before the user-equipment performs the carrier aggregation.

4. The method of claim 1, wherein, the network side configuring, for the user-equipment, uniform Transmission Power Control PUSCH RNTIs in the plurality of cells which are carrier-aggregated, comprises: the network side configuring, for the user-equipment, a same Transmission Power Control PUSCH RNTI or different Transmission Power Control PUSCH RNTIs in different ones of the plurality of cells which are carrier-aggregated, the configured Transmission Power Control PUSCH RNTI or Transmission Power Control PUSCH RNTIs being different from the RNTIs which the network side has configured for all user-equipments in the plurality of cells before the user-equipment performs the carrier aggregation;
the network side configuring, for the user-equipment, uniform Transmission Power Control PUCCH RNTIs in the plurality of cells which are carrier-aggregated, comprises: the network side configuring, for the user-equipment, a same Transmission Power Control PUCCH RNTI or different Transmission Power Control PUCCH RNTIs in different ones of the plurality of cells which are carrier-aggregated, the configured Transmission Power Control PUCCH RNTI or Transmission Power Control PUCCH RNTIs being different from the RNTIs which the network side has configured for all user-equipments in the plurality of cells before the user-equipment performs the carrier aggregation.

5. The method of claim 1, wherein, the network side and the user-equipment performing data reception and data transmission using the uniform RNTIs in activated ones of the plurality of cells which are carrier-aggregated, comprises:
the network side performing data reception and data transmission with the user-equipment using a same C-RNTI and/or a same Semi-Persistent Scheduling C-RNTI in different and activated ones of the plurality of cells which are carrier-aggregated.

6. The method of claim 1, wherein, the network side and the user-equipment performing data reception and data transmission using the uniform RNTIs in activated ones of the plurality of cells which are carrier-aggregated, comprises:
the network side sending power control information to the user-equipment using uniform Transmission Power Control PUSCH RNTIs and Transmission Power Control PUCCH RNTIs configured in activated ones of the plurality of cells which are carrier-aggregated.

7. The method of claim 1, wherein, not configuring new C-RNTIs and/or new Semi-Persistent Scheduling C-RNTIs for the user-equipment any more when configuring the carrier aggregation by the network side; and/or not configuring new C-RNTIs and/or new Semi-Persistent Scheduling C-RNTIs for the user-equipment any more when configuring and activating the carrier aggregation by the network side;
the network side and the user-equipment performing data reception and data transmission using the uniform RNTIs in activated ones of the plurality of cells which are carrier-aggregated, comprises: the network side and the user-equipment performing data reception and/or data transmission using the uniform C-RNTI and/or the uniform Semi-Persistent Scheduling C-RNTI in all activated ones of the plurality of cells which are carrier-aggregated.

8. The method of claim 1, wherein, the network side and the user-equipment performing data reception and data transmission using the uniform RNTIs in activated ones of the plurality of cells which are carrier-aggregated, comprises:
the user-equipment monitoring Physical Downlink Control Channels PDCCHs on carriers having the PDCCHs in activated ones of the plurality of cells which are carrier-aggregated, and
receiving scheduling information by using a same C-RNTI and/or a same Semi-Persistent Scheduling C-RNTI.

9. The method of claim 1, wherein, the network side and the user-equipment performing data reception and data transmission using the uniform RNTIs in activated ones of the plurality of cells which are carrier-aggregated, comprises:
the user-equipment monitoring Physical Downlink Control Channels PDCCHs on carriers having the PDCCHs in activated ones of the plurality of cells which are carrier-aggregated, and
receiving transmission power control information by using uniform Transmission Power Control PUSCH RNTIs and/or uniform Transmission Power Control PUCCH RNTIs.

10. The method of claim 1, wherein, when the user-equipment hands over from a source node at the network side to a target node at the network side, the network side configuring, for a user-equipment performing carrier aggregation, uniform RNTIs in a plurality of cells which are carrier-aggregated, comprises:
the target node at the network side sending a handover-request response message to the source node at the network side, wherein the handover-request response message comprises RNTIs which the target node at the network side configured for the user-equipment and frequency information or frequency information indices of other ones of the plurality of cells which are carrier-aggregated; and
the source node at the network side sending a handover command message to the user-equipment, wherein the handover command message comprises the RNTIs which the target node at the network side configured for the user-equipment and the frequency information or the frequency information indices of other ones of the plurality of cells which are carrier-aggregated.

11. The method of claim 10, wherein, the RNTIs which the target node at the network side configured for the user-equipment, comprise:
at least one of a unique C-RNTI and a unique Semi-Persistent Scheduling C-RNTI which the target node at the network side configured for the user-equipment.

12. A system adapted to use a user-equipment identity, comprising a network side and a user-equipment, comprising:
the network side (90) adapted to configure, for a user-equipment performing carrier aggregation, uniform radio network temporary identities RNTIs in a plurality of cells which are carrier-aggregated, and adapted to perform data reception and data transmission with the user-equipment using the uniform RNTIs in activated ones of the plurality of cells which are carrier-aggregated; and
the user-equipment (100) adapted to receive the uniform RNTIs which the network side configures for the user-equipment, and adapted to perform data reception and data transmission with the network side using the uniform RNTIs in activated ones of the plurality of cells which are carrier-aggregated,
wherein the configured RNTIs are different from RNTIs which the network side has configured for all user-equipments in the plurality of cells before the user-equipment performs the carrier aggregation, and the uniform RNTIs comprise at least one of a Cell Radio Network Temporary Identifier C-RNTI, a Semi-Persistent Scheduling C-RNTI, Transmission Power Control PUSCH RNTIs, and Transmission Power Control PUCCH RNTIs.

13. A network side device, comprising a configuration module (91) and a transceiver module (92), wherein:
the configuration module (91) is adapted to configure, for a user-equipment performing carrier aggregation, uniform RNTIs;
the transceiver module (92) is adapted to perform data reception and data transmission with the user-equipment using the uniform RNTIs in activated ones of a plurality of cells which are carrier-aggregated,
wherein the configured RNTIs are different from RNTIs which the network side device has configured for all user-equipments in the plurality of cells before the user-equipment performs the carrier aggregation, and the uniform RNTIs comprise at least one of a Cell Radio Network Temporary Identifier C-RNTI, a Semi-Persistent Scheduling C-RNTI, Transmission Power Control PUSCH RNTIs, and Transmission Power Control PUCCH RNTIs.

14. The network side device of claim 13, wherein, configuring uniform RNTIs, comprises:
sharing available RNTIs among the plurality of cells which are carrier-aggregated.

15. The network side device of claim 13, wherein, when the configuration module (91) is further adapted to configure the uniform C-RNTI, the configuration module (91) configures, for the user-equipment, a same C-RNTI in different ones of the plurality of cells which are carrier-aggregated, wherein the uniform C-RNTI is different from RNTIs which the network side has configured for all user-equipments in the plurality of cells before the user-equipment performs ;
when the configuration module (91) configures the uniform Semi-Persistent Scheduling C-RNTI, the configuration module configures (91), for the user-equipment, a same Semi-Persistent Scheduling C-RNTI in different ones of the plurality of cells which are carrier-aggregated, wherein the configured Semi-Persistent Scheduling C-RNTI is different from RNTIs which the network side has configured for all user-equipments in the plurality of cells before the user-equipment performs the carrier aggregation.

16. The network side device of claim 13, wherein, when the configuration module (91) is further adapted to configure the uniform Transmission Power Control PUSCH RNTIs, the configuration module (91) configures, for the user-equipment, a same Transmission Power Control PUSCH RNTI or different Transmission Power Control PUSCH RNTIs in different ones of the plurality of cells which are carrier-aggregated, wherein the configured Transmission Power Control PUSCH RNTI or the configured Transmission Power Control PUSCH RNTIs are different from RNTIs which the network side has configured for all user-equipments in the plurality of cells before the user-equipment performs the carrier aggregation;
when the configuration module (91) configures the uniform Transmission Power Control PUCCH RNTIs, the configuration module (91) configures, for the user-equipment, a same Transmission Power Control PUCCH RNTI or different Transmission Power Control PUCCH RNTIs in different ones of the plurality of cells which are carrier-aggregated, wherein the configured Transmission Power Control PUCCH RNTI or the configured Transmission Power Control PUCCH RNTIs are different from the RNTIs which the network side has configured for all user-equipments in the plurality of cells before the user-equipment performs the carrier aggregation.

17. The network side device of claim 13, wherein, the transceiver module (92) is specifically used to: perform data reception and data transmission with the user-equipment using the same C-RNTI and/or the same Semi-Persistent Scheduling C-RNTI in different and activated ones of the plurality of cells which are carrier-aggregated

18. The network side device of claim 13, wherein, the transceiver module (92) is specifically used to: send power control information to the user-equipment using the uniform Transmission Power Control PUSCH RNTIs and the uniform Transmission Power Control PUCCH RNTIs in activated ones of the plurality of cells which are carrier-aggregated.

19. The network side device of claim 13, wherein, when configuring the carrier aggregation, the configuration module (91) does not configure new C-RNTIs and/or new Semi-Persistent Scheduling C-RNTIs for the user-equipment any more; and/or, when configuring and activating the carrier aggregation, the configuring module (91) does not configure new C-RNTIs and/or new Semi-Persistent Scheduling C-RNTIs for the user-equipment any more; and
the transceiver module (92) is specifically used for: performing data reception and/or data transmission with the user-equipment using the uniform C-RNTI and/or the uniform Semi-Persistent Scheduling C-RNTI in all activated ones of the plurality of cells which are carrier-aggregated.

20. The network side device of claim 13, wherein, when the user-equipment hands over from a source node at the network side to a target node at the network side, if the network side device is the target node, the network side device is also used to: send a handover-request response message to the source node at the network side, wherein the handover-request response message comprises the RNTIs which the target node at the network side configures for the user-equipment and frequency information or frequency information indices of other ones of the plurality of cells which are carrier-aggregated; and
when the user-equipment hands over from a source node at the network side to a target node at the network side, if the network side device is the source node, the network side device is also used to: send a handover command message to the user-equipment, wherein the handover command message comprises the RNTIs which the target node at the network side configures for the user-equipment and the frequency information or the frequency information indices of other ones of the plurality of cells wherein the carrier aggregation is performed.

21. The network side device of claim 20, wherein, the configuration module (91) is specifically used to: configure, for the user-equipment, a unique C-RNTI and/or a unique Semi-Persistent Scheduling C-RNTI.

## Patentansprüche

1. Verfahren zur Verwendung einer Benutzergeräte-Identität, umfassend:
eine Netzwerkseite, die ein Benutzergerät konfiguriert, das eine Trägeraggregation durchführt, einheitliche temporäre Funknetzwerk-Identitäten RNTIs in einer Vielzahl von Zellen, die trägeraggregiert sind; und
die Netzwerkseite und das Benutzergerät Datenempfang und Datenübertragung unter Verwendung der einheitlichen RNTIs in aktivierten Zellen der Vielzahl von Zellen durchführen (202), die trägeraggregiert sind,
wobei sich die einheitlichen RNTIs von RNTIs unterscheiden, die die Netzwerkseite für alle Benutzergeräte in der Vielzahl von Zellen konfiguriert haben, bevor das Benutzergerät die Trägeraggregation durchführt, und die einheitlichen RNTIs mindestens einen von einem temporären Mobilfunknetz-Identifikator C-RNTI, einer semipersistenten Planungs-C-RNTI, Übertragungsleistungsteuerungen PUSCH RNTIs und Übertragungsleistungsteuerungen PUCCH RNTIs umfassen.

2. Verfahren nach Anspruch 1, wobei das Konfigurieren von einheitlichen RNTIs umfasst:
Teilen von verfügbaren RNTIs zwischen der Vielzahl von Zellen, die trägeraggregiert sind.

3. Verfahren nach Anspruch 1, wobei die Netzwerkseite, die für das Benutzergerät ein einheitliches C-RNTI in der Vielzahl von Zellen konfiguriert, die trägeraggregiert sind, umfasst: die Netzwerkseite konfiguriert die gleiche C-RNTI für das Benutzergerät in verschiedenen der Vielzahl von Zellen, die trägeraggregiert sind, wobei sich das konfigurierte C-RNTI von den RNTIs unterscheidet, die die Netzwerkseite für alle Benutzergeräte in der Vielzahl von Zellen konfiguriert hat, bevor das Benutzergerät die Trägeraggregation durchführt; und
die Netzwerkseite, die eine semipersistente Planungs-C-RNTI für das Benutzergerät in der Vielzahl von Zellen konfiguriert, die trägeraggregiert sind, umfasst: die Netzwerkseite konfiguriert die gleiche SPS C-RNTI für das Benutzergerät in verschiedenen der Vielzahl von Zellen, die trägeraggregiert sind, wobei sich das konfigurierte semipersistente Planungs-C-RNTI von den RNTIs unterscheidet, die die Netzwerkseite für alle Benutzergeräte in der Vielzahl von Zellen konfiguriert hat, bevor das Benutzergerät die Trägeraggregation durchführt.

4. Verfahren nach Anspruch 1, wobei die Netzwerkseite, die für das Benutzergerät eine einheitliche Übertragungsleistungsteuerung PUSCH-RNTIs in der Vielzahl von Zellen konfiguriert, die trägeraggregiert sind, umfasst: die Netzwerkseite konfiguriert für das Benutzergerät eine gleiche Übertragungsleistungssteuerung PUSCH RNTI oder verschiedene Übertragungsleistungssteuerungen PUSCH RNTIs in verschiedenen der Vielzahl von Zellen, die trägeraggregiert sind, die konfigurierte Übertragungsleistungssteuerung PUSCH RNTI oder Übertragungsleistungssteuerungen PUSCH RNTIs unterscheiden sich von den RNTIs, die die Netzwerkseite für alle Benutzergeräte in der Vielzahl von Zellen konfiguriert hat, bevor das Benutzergerät die Trägeraggregation durchführt; die Netzwerkseite, die für das Benutzergerät einheitliche Übertragungsleistungssteuerungen PUCCH RNTIs in der Vielzahl von Zellen konfiguriert, die trägeraggregiert sind, umfasst: die Netzwerkseite konfiguriert für das Benutzergerät eine gleiche Übertragungsleistungssteuerung PUCCH RNTI oder verschiedene Übertragungsleistungssteuerungen PUCCH RNTIs in verschiedenen der Vielzahl von Zellen, die trägeraggregiert sind, wobei sich die konfigurierte Übertragungsleistungssteuerung PUCCH RNTI oder Übertragungsleistungssteuerungen PUCCH RNTIs von den RNTIs unterscheiden, die die Netzwerkseite für alle Benutzergeräte in der Vielzahl von Zellen konfiguriert hat, bevor das Benutzergerät die Trägeraggregation durchführt.

5. Verfahren nach Anspruch 1, wobei die Netzwerkseite und das Benutzergerät, das Datenempfang und Datenübertragung unter Verwendung der einheitlichen RNTIs in aktivierten Zellen der Vielzahl von Zellen durchführt, die trägeraggregiert sind, umfasst: die Netzwerkseite, die Datenempfang und Datenübertragung mit dem Benutzergerät unter Verwendung eines gleichen C-RNTI und/oder einer gleichen semipersistenten Planungs-C-RNTI in verschiedenen und aktivierten Zellen der Vielzahl von Zellen durchführt, die trägeraggregiert sind.

6. Verfahren nach Anspruch 1, wobei die Netzwerkseite und das Benutzergerät Datenempfang und Datenübertragung unter Verwendung der einheitlichen RNTIs in aktivierten Zellen der Vielzahl von Zellen, die trägeraggregiert sind, durchführen, umfassend: die Netzwerkseite sendet eine Leistungssteuerungsinformation an das Benutzergerät unter Verwendung einheitlicher Übertragungsleistungssteuerungen PUSCH-RNTIs und Übertragungsleistungssteuerungen PUCCH-RNTIs, die in aktivierten Zellen der Vielzahl von Zellen konfiguriert sind, die trägeraggregiert sind.

7. Verfahren nach Anspruch 1, wobei keine neuen C-RNTIs und/oder neue semipersistente Planungs-C-RNTIs für das Benutzergerät mehr konfiguriert werden, wenn die Trägeraggregation durch die Netzwerkseite konfiguriert wird; und/oder keine neuen C-RNTIs und/oder neue semipersistente Planungs-C-RNTIs für das Benutzergerät mehr konfiguriert werden, wenn die Trägeraggregation durch die Netzwerkseite konfiguriert und aktiviert wird; die Netzwerkseite und das Benutzergerät, das Datenempfang und Datenübertragung unter Verwendung der einheitlichen RNTIs in aktivierten Zellen der Vielzahl von Zellen durchführt, die trägeraggregiert sind, umfassen: die Netzwerkseite und das Benutzergerät, die Datenempfang und/oder Datenübertragung unter Verwendung des einheitlichen C-RNTI und/oder der einheitlichen semipersistenten Planungs-C-RNTI in allen aktivierten Zellen der Vielzahl von Zellen durchführen, die trägeraggregiert sind.

8. Verfahren nach Anspruch 1, wobei die Netzwerkseite und das Benutzergerät, das Datenempfang und Datenübertragung unter Verwendung der einheitlichen RNTIs in aktivierten Zellen der Vielzahl von Zellen durchführt, die trägeraggregiert sind, umfassen:
das Benutzergerät zum Überwachen der physikalischen Downlink-Steuerkanäle PDCCHs auf Trägern, die die PDCCHs in aktivierten Zellen aus der Vielzahl der Zellen tragen, die trägeraggregiert sind, und
Empfangen einer Planungsinformation unter Verwendung eines gleichen C-RNTI und/oder einer gleichen semipersistenten Planungs-C-RNTI.

9. Verfahren nach Anspruch 1, wobei die Netzwerkseite und das Benutzergerät, das Datenempfang und Datenübertragung unter Verwendung der einheitlichen RNTIs in aktivierten Zellen der Vielzahl von Zellen durchführt, die trägeraggregiert sind, umfassen:
das Benutzergerät zum Überwachen der physikalischen Downlink-Steuerungskanäle PDCCHs auf Trägern, die die PDCCHs in aktivierten Zellen aus der Vielzahl von Zellen tragen, die trägeraggregiert sind, und
Empfangen von Übertragungsleistungssteuerungsinformation unter Verwendung von einheitlichen Übertragungsleistungssteuerungen PUSCH RNTIs und/oder einheitlichen Übertragungsleistungssteuerungen PUCCH RNTIs.

10. Verfahren nach Anspruch 1, wobei die Netzwerkseite für ein Benutzergerät, das die Trägeraggregation durchführt, einheitliche RNTIs in einer Vielzahl von Zellen konfiguriert, die trägeraggregiert sind, wenn das Benutzergerät von einem Quellknoten auf der Netzwerkseite zu einem Zielknoten auf der Netzwerkseite übergeht, umfassend:
der Zielknoten auf der Netzwerkseite sendet eine Übergabeaufforderungantwortnachricht an den Quellknoten auf der Netzwerkseite, wobei die Übergabeaufforderungantwortnachricht RNTIs umfasst, die der Zielknoten auf der Netzwerkseite für das Benutzergerät und eine Frequenzinformation oder Frequenzinformationindizes von anderen aus der Vielzahl von Zellen konfiguriert, die trägeraggregiert sind; und
der Quellknoten auf der Netzwerkseite eine Übergabebefehlsnachricht an das Benutzergerät sendet, wobei die Übergabebefehlsnachricht die RNTIs umfasst, die der Zielknoten auf der Netzwerkseite für das Benutzergerät und die Frequenzinformation oder die Frequenzinformationsindizes anderer aus der Vielzahl von Zellen konfiguriert hat, die trägeraggregiert sind.

11. Verfahren nach Anspruch 10, wobei die RNTIs, die der Zielknoten auf der Netzwerkseite für das Benutzergerät konfiguriert hat, umfassen:
mindestens eines von einem einheitlichen C-RNTI und einem einheitlichen semipersistenten Planungs-C-RNTI, das der Zielknoten auf der Netzwerkseite für das Benutzergerät konfiguriert hat.

12. System, ausgelegt zur Verwendung einer Benutzergeräte-Identität, umfassend eine Netzwerkseite und ein Benutzergerät, umfassend:
die Netzwerkseite (90) ausgelegt ist, um für ein Benutzergerät, das eine Trägeraggregation durchführt, einheitliche temporäre Funknetzwerk-Identitäten RNTIs in einer Vielzahl von Zellen zu konfigurieren, die trägeraggregiert sind, und ausgelegt ist, um Datenempfang und Datenübertragung mit dem Benutzergerät unter Verwendung der einheitlichen RNTIs in aktivierten Zellen in einer Vielzahl von Zellen durchzuführen, die trägeraggregiert sind; und
das Benutzergerät (100) ausgelegt ist, um die einheitlichen RNTIs zu empfangen, die die Netzwerkseite für das Benutzergerät konfiguriert, und ausgelegt ist, um Datenempfang und Datenübertragung mit der Netzwerkseite unter Verwendung der einheitlichen RNTIs in aktivierten Zellen der Vielzahl von Zellen durchzuführen, die trägeraggregiert sind,
wobei sich die konfigurierten RNTIs von RNTIs unterscheiden, die die Netzwerkseite für alle Benutzergeräte in der Vielzahl von Zellen konfiguriert haben, bevor das Benutzergerät die Trägeraggregation durchführt, und die einheitlichen RNTIs mindestens einen von einem temporären Mobilfunknetz-Identifikator C-RNTI, einer semipersistenten Planungs-C-RNTI, Übertragungsleistungsteuerung PUSCH RNTIs und Übertragungsleistungsteuerung PUCCH RNTIs umfassen.

13. Netzwerkseitige Vorrichtung, umfassend ein Konfigurationsmodul (91) und ein Transceivermodul (92), wobei:
das Konfigurationsmodul (91) ausgelegt ist, um für ein Benutzergerät, das eine Trägeraggregation durchführt, einheitliche RNTIs zu konfigurieren;
das Transceivermodul (92) ausgelegt ist, um Datenempfang und Datenübertragung mit dem Benutzergerät unter Verwendung der einheitlichen RNTIs in aktivierten Zellen aus einer Vielzahl von Zellen durchzuführen, die trägeraggregiert sind,
wobei sich die konfigurierten RNTIs von RNTIs unterscheiden, die die netzwerkseitige Vorrichtung für alle Benutzergeräte in der Vielzahl von Zellen konfiguriert hat, bevor das Benutzergerät die Trägeraggregation durchführt, und die einheitlichen RNTIs mindestens einen von einem temporären Mobilfunknetz-Identifikator C-RNTI, einer semipersistenten Planungs-C-RNTI, Übertragungsleistungsteuerungen PUSCH RNTIs und Übertragungsleistungsteuerungen PUCCH RNTIs umfassen.

14. Netzwerkseitige Vorrichtung nach Anspruch 13, wobei das Konfigurieren von einheitlichen RNTIs umfasst:
Teilen von verfügbaren RNTIs zwischen der Vielzahl von Zellen, die trägeraggregiert sind.

15. Netzwerkseitige Vorrichtung nach Anspruch 13, wobei das Konfigurationsmodul (91) ferner ausgelegt ist, um das einheitliche C-RNTI zu konfigurieren, das Konfigurationsmodul (91) konfiguriert für das Benutzergerät ein gleiches C-RNTI in verschiedenen der Vielzahl von Zellen, die trägeraggregiert sind, wobei sich das einheitliche C-RNTI von RNTIs unterscheidet, die die Netzwerkseite für alle Benutzergeräte in der Vielzahl von Zellen konfiguriert haben, bevor das Benutzergerät durchführt;
wenn das Konfigurationsmodul (91) die einheitliche semipersistente Planungs-C-RNTI konfiguriert, konfiguriert das Konfigurationsmodul (91) für das Benutzergerät eine gleiche semipersistente Planungs-C-RNTI in verschiedenen der Vielzahl von Zellen, die trägeraggregiert sind, wobei sich das konfigurierte semipersistente Planungs-C-RNTI von RNTIs unterscheidet, die die Netzwerkseite für alle Benutzergeräte in der Vielzahl von Zellen konfiguriert haben, bevor das Benutzergerät die Trägeraggregation durchführt;
wenn das Konfigurationsmodul (91) die einheitliche semipersistente Planungs-C-RNTI konfiguriert, konfiguriert das Konfigurationsmodul (91) für das Benutzergerät eine gleiche semipersistente Planungs-C-RNTI in verschiedenen der Vielzahl von Zellen, die trägeraggregiert sind, wobei sich das konfigurierte semipersistente Planungs-C-RNTI von RNTIs unterscheidet, die die Netzwerkseite für alle Benutzergeräte in der Vielzahl von Zellen konfiguriert hat, bevor das Benutzergerät die Trägeraggregation durchführt.

16. Netzwerkseitige Vorrichtung nach Anspruch 13, wobei das Konfigurationsmodul (91) für das Benutzergerät eine gleiche Übertragungsleistungssteuerung PUSCH RNTI oder verschiedene Übertragungsleistungssteuerungen PUSCH RNTIs in verschiedenen der Vielzahl von Zellen konfiguriert, die trägeraggregiert sind, wenn das Konfigurationsmodul (91) ferner ausgelegt ist, um die einheitlichen Übertragungsleistungssteuerungen PUSCH RNTIs zu konfigurieren, wobei sich die konfigurierte Übertragungsleistungssteuerung PUSCH RNTI oder die konfigurierten Übertragungsleistungssteuerungen PUSCH RNTIs von RNTIs unterscheiden, die die Netzwerkseite für alle Benutzergeräte in der Vielzahl von Zellen konfiguriert haben, bevor das Benutzergerät die Trägeraggregation durchführt;
wenn das Konfigurationsmodul (91) die einheitlichen Übertragungsleistungssteuerungen PUCCH RNTIs konfiguriert, konfiguriert das Konfigurationsmodul (91) für das Benutzergerät eine gleiche Übertragungsleistungssteuerung PUCCH RNTI oder verschiedene Übertragungsleistungssteuerungen PUCCH RNTIs in verschiedenen der Vielzahl von Zellen, die trägeraggregiert sind, wobei sich die konfigurierte Übertragungsleistungssteuerung PUCCH RNTI oder die konfigurierten Übertragungsleistungssteuerungen PUCCH RNTIs von den RNTIs unterscheiden, die die Netzwerkseite für alle Benutzergeräte in der Vielzahl von Zellen konfiguriert haben, bevor das Benutzergerät die Trägeraggregation durchführt.

17. Netzwerkseitige Vorrichtung nach Anspruch 13, wobei das Transceivermodul (92) insbesondere verwendet wird um:
Datenempfang und Datenübertragung mit dem Benutzergerät unter Verwendung des gleichen C-RNTI und/oder des gleichen semipersistenten Planungs-C-RNTI in verschiedenen und aktivierten Zellen der Vielzahl von Zellen durchzuführen, die trägeraggregiert sind.

18. Netzwerkseitige Vorrichtung nach Anspruch 13, wobei das Transceivermodul (92) insbesondere verwendet wird um:
eine Leistungssteuerungsinformation an das Benutzergerät unter Verwendung der einheitlichen Übertragungsleistungssteuerung PUSCH RNTIs und der einheitlichen Übertragungsleistungssteuerungen PUCCH RNTIs in aktivierten Zellen der Vielzahl von Zellen zu senden, die trägeraggregiert sind.

19. Netzwerkseitige Vorrichtung nach Anspruch 13, wobei das Konfigurationsmodul (91) bei der Konfiguration der Trägeraggregation keine neuen C-RNTIs und/oder neuen semipersistenten Planungs-C-RNTIs für das Benutzergerät mehr konfiguriert; und/oder das Konfigurationsmodul (91) bei der Konfiguration und Aktivierung der Trägeraggregation keine neuen C-RNTIs und/oder neuen semipersistenten Planungs-C-RNTIs für das Benutzergerät mehr konfiguriert; und das Transceivermodul (92) insbesondere verwendet wird zum: Durchführen von Datenempfang und/oder Datenübertragung mit dem Benutzergerät unter Verwendung des einheitlichen C-RNTI und/oder der einheitlichen semipersistenten Planungs-C-RNTI in allen aktivierten Zellen der Vielzahl von Zellen, die trägeraggregiert sind.

20. Netzwerkseitige Vorrichtung nach Anspruch 13, wobei das netzwerkseitige Benutzergerät, wenn das Benutzergerät von einem Quellknoten auf der Netzwerkseite an einen Zielknoten auf der Netzwerkseite übergibt, wenn die netzwerkseitige Vorrichtung der Zielknoten ist, auch verwendet wird, um:
eine Übermittlungsanforderungsantwortnachricht an den Quellknoten auf der Netzwerkseite zu senden, wobei die Übermittlungsanforderungsantwortnachricht die RNTIs umfasst, die der Zielknoten auf der Netzwerkseite für das Benutzergerät und einer Frequenzinformation oder Frequenzinformationsindizes von anderen der Vielzahl von Zellen konfiguriert, die trägeraggregiert sind; und
wenn das Benutzergerät von einem Quellknoten auf der Netzwerkseite an einen Zielknoten auf der Netzwerkseite übergibt, wenn das Benutzergerät der Quellknoten ist, wird das Netzwerkgerät auch verwendet, um: eine Übergabebefehlsnachricht an das Benutzergerät zu senden, wobei die Übergabebefehlsnachricht die RNTIs umfasst, die der Zielknoten auf der Netzwerkseite für das Benutzergerät und die Frequenzinformation oder die Frequenzinformationsindizes anderer aus der Vielzahl von Zellen konfiguriert, wobei die Trägeraggregation durchgeführt wird.

21. Netzwerkseitige Vorrichtung nach Anspruch 20, wobei das Konfigurationsmodul (91) insbesondere verwendet wird, um für das Benutzergerät ein einheitliches C-RNTI und/oder ein einheitliches semipersistentes Planungs-C-RNTI zu konfigurieren.

## Revendications

1. Procédé d'utilisation d'une identité d'équipement utilisateur, comprenant :
une configuration par un côté réseau (201), pour un équipement utilisateur réalisant une agrégation de porteuses, d'identités temporaires de réseau radio RNTI uniformes dans une pluralité de cellules aux porteuses agrégées ; et
la réalisation par le côté réseau et par l'équipement utilisateur (202) d'une réception de données et d'une transmission de données en utilisant les RNTI uniformes dans des cellules activées de la pluralité de cellules aux porteuses agrégées,
dans lequel les RNTI uniformes sont différentes des RNTI que le côté réseau a configurées pour tous les équipements utilisateurs dans la pluralité de cellules avant que l'équipement utilisateur réalise l'agrégation de porteuses, et les RNTI uniformes comprennent au moins un d'un identifiant temporaire de réseau radio cellulaire C-RNTI, d'un C-RNTI d'ordonnancement semi-persistant, de RNTI de canaux PUSCH de commande de puissance de transmission, et de RNTI de canaux PUCCH de commande de puissance de transmission.

2. Procédé selon la revendication 1, dans lequel, la configuration de RNTI uniformes comprend :
le partage de RNTI disponibles entre la pluralité de cellules aux porteuses agrégées.

3. Procédé selon la revendication 1, dans lequel, la configuration par le côté réseau, pour l'équipement utilisateur, d'un C-RNTI uniforme dans la pluralité de cellules aux porteuses agrégées, comprend : la configuration par le côté réseau d'un même C-RNTI pour l'équipement utilisateur dans différentes cellules de la pluralité de cellules aux porteuses agrégées, le C-RNTI configuré étant différent des RNTI que le côté réseau a configurées pour tous les équipements utilisateurs dans la pluralité de cellules avant que l'équipement utilisateur réalise l'agrégation de porteuses ; et
la configuration par le côté réseau d'un C-RNTI d'ordonnancement semi-persistant pour l'équipement utilisateur dans la pluralité de cellules aux porteuses agrégées, comprend : la configuration par le côté réseau d'un même C-RNTI d'ordonnancement semi-persistant (SPS) pour l'équipement utilisateur dans différentes cellules de la pluralité de cellules aux porteuses agrégées, le C-RNTI d'ordonnancement semi-persistant configuré étant différent des RNTI que le côté réseau a configurées pour tous les équipements utilisateurs dans la pluralité de cellules avant que l'équipement utilisateur réalise l'agrégation de porteuses.

4. Procédé selon la revendication 1, dans lequel, la configuration par le côté réseau, pour l'équipement utilisateur, de RNTI de canaux PUSCH de commande de puissance de transmission uniformes dans la pluralité de cellules aux porteuses agrégées, comprend : la configuration par le côté réseau, pour l'équipement utilisateur, d'une même RNTI de canal PUSCH de commande de puissance de transmission ou de différentes RNTI de canaux PUSCH de commande de puissance de transmission dans des cellules différentes de la pluralité de cellules aux porteuses agrégées, la RNTI de canal PUSCH de commande de puissance de transmission configurée ou les RNTI de canaux PUSCH de commande de puissance de transmission configurées étant différentes des RNTI que le côté réseau a configurées pour tous les équipements utilisateurs dans la pluralité de cellules avant que l'équipement utilisateur réalise l'agrégation de porteuses ;
la configuration par le côté réseau, pour l'équipement utilisateur, de RNTI de canaux PUCCH de commande de puissance de transmission uniformes dans la pluralité de cellules aux porteuses agrégées, comprend : la configuration par le côté réseau, pour l'équipement utilisateur, d'une même RNTI de canal PUCCH de commande de puissance de transmission ou de différentes RNTI de canaux PUCCH de commande de puissance de transmission dans des cellules différentes de la pluralité de cellules aux porteuses agrégées, la RNTI de canal PUCCH de commande de puissance de transmission configurée ou les RNTI de canaux PUCCH de commande de puissance de transmission configurées étant différentes des RNTI que le côté réseau a configurées pour tous les équipements utilisateurs dans la pluralité de cellules avant que l'équipement utilisateur réalise l'agrégation de porteuses.

5. Procédé selon la revendication 1, dans lequel, la réalisation par le côté réseau et l'équipement utilisateur d'une réception de données et d'une transmission de données en utilisant les RNTI uniformes dans des cellules activées de la pluralité de cellules aux porteuses agrégées, comprend :
la réalisation par le côté réseau d'une réception de données et d'une transmission de données avec l'équipement utilisateur en utilisant un même C-RNTI et/ou un même C-RNTI d'ordonnancement semi-persistant dans différentes cellules activées de la pluralité de cellules aux porteuses agrégées.

6. Procédé selon la revendication 1, dans lequel, la réalisation par le côté réseau et l'équipement utilisateur d'une réception de données et d'une transmission de données en utilisant les RNTI uniformes dans des cellules activées de la pluralité de cellules aux porteuses agrégées, comprend :
l'envoi par le côté réseau d'informations de commande de puissance à l'équipement utilisateur en utilisant des RNTI de canaux PUSCH de commande de puissance de transmission uniformes et des RNTI de canaux PUCCH de commande de puissance de transmission configurées dans des cellules activées de la pluralité de cellules aux porteuses agrégées.

7. Procédé selon la revendication 1, comprenant l'arrêt de la configuration de nouveaux C-RNTI et/ou de nouveaux C-RNTI d'ordonnancement semi-persistant pour l'équipement utilisateur lors de la configuration de l'agrégation de porteuses par le côté réseau ; et/ou l'arrêt de la configuration de nouveaux C-RNTI et/ou nouveaux C-RNTI d'ordonnancement semi-persistant pour l'équipement utilisateur lors de la configuration et de l'activation de l'agrégation de porteuses par le côté réseau ;
la réalisation par le côté réseau et l'équipement utilisateur d'une réception de données et d'une transmission de données en utilisant les RNTI uniformes dans des cellules activées de la pluralité de cellules aux porteuses agrégées, comprend : la réalisation par le côté réseau et l'équipement utilisateur d'une réception de données et/ou transmission de données en utilisant le C-RNTI uniforme et/ou les C-RNTI d'ordonnancement semi-persistant uniformes dans toutes les cellules activées de la pluralité de cellules aux porteuses agrégées.

8. Procédé selon la revendication 1, dans lequel, la réalisation par le côté réseau et l'équipement utilisateur d'une réception de données et d'une transmission de données en utilisant les RNTI uniformes dans des cellules activées de la pluralité de cellules aux porteuses agrégées, comprend :
la surveillance par l'équipement utilisateur de canaux physiques de commande de liaison descendante PDCCH sur des porteuses ayant les PDCCH dans des cellules activées de la pluralité de cellules aux porteuses agrégées, et
la réception d'informations d'ordonnancement en utilisant un même C-RNTI et/ou un même C-RNTI d'ordonnancement semi-persistant.

9. Procédé selon la revendication 1, dans lequel, la réalisation par le côté réseau et l'équipement utilisateur d'une réception de données et d'une transmission de données en utilisant les RNTI uniformes dans des cellules activées de la pluralité de cellules aux porteuses agrégées, comprend :
la surveillance par l'équipement utilisateur de canaux physiques de commande de liaison descendante PDCCH sur des porteuses ayant les PDCCH dans des cellules activées de la pluralité de cellules aux porteuses agrégées, et
la réception d'une transmission d'informations de commande de puissance en utilisant des RNTI de canaux PUSCH de commande de puissance de transmission uniformes et/ou des RNTI de canaux PUCCH de commande de puissance de transmission uniformes.

10. Procédé selon la revendication 1, dans lequel, quand l'équipement utilisateur effectue un transfert d'un nœud source côté réseau à un nœud cible côté réseau, la configuration par le côté réseau, pour un équipement utilisateur réalisant une agrégation de porteuses, de RNTI uniformes dans une pluralité de cellules aux porteuses agrégées, comprend :
l'envoi par le nœud cible côté réseau d'un message de réponse de demande de transfert au nœud source côté réseau, dans lequel le message de réponse de demande de transfert comprend des RNTI que le nœud cible côté réseau a configurées pour l'équipement utilisateur et des informations de fréquence ou des indices d'informations de fréquence d'autres cellules de la pluralité de cellules aux porteuses agrégées ; et
l'envoi par le nœud source côté réseau d'un message de commande de transfert à l'équipement utilisateur, dans lequel le message de commande de transfert comprend les RNTI que le nœud cible côté réseau a configurées pour l'équipement utilisateur et les informations de fréquence ou les indices d'informations de fréquence d'autres cellules de la pluralité de cellules aux porteuses agrégées.

11. Procédé selon la revendication 10, dans lequel, les RNTI que le nœud cible côté réseau a configurées pour l'équipement utilisateur, comprennent :
au moins un d'un C-RNTI unique et d'un C-RNTI d'ordonnancement semi-persistant unique que le nœud cible côté réseau a configuré pour l'équipement utilisateur.

12. Système adapté pour utiliser une identité d'équipement utilisateur, comprenant un côté réseau et un équipement utilisateur, comprenant :
le côté réseau (90) adapté pour configurer, pour un équipement utilisateur réalisant une agrégation de porteuses, des identités temporaires de réseau radio RNTI uniformes dans une pluralité de cellules aux porteuses agrégées, et adapté pour réaliser une réception de données et une transmission de données avec l'équipement utilisateur en utilisant les RNTI uniformes dans des cellules activées de la pluralité de cellules aux porteuses agrégées; et
l'équipement utilisateur (100) adapté pour recevoir les RNTI uniformes que le côté réseau configure pour l'équipement utilisateur, et adapté pour réaliser une réception de données et une transmission de données avec le côté réseau en utilisant les RNTI uniformes dans des cellules activées de la pluralité de cellules aux porteuses agrégées,
dans lequel les RNTI configurées sont différentes des RNTI que le côté réseau a configurées pour tous les équipements utilisateurs dans la pluralité de cellules avant que l'équipement utilisateur réalise l'agrégation de porteuses, et les RNTI uniformes comprennent au moins un d'un identifiant temporaire de réseau radio cellulaire C-RNTI, d'un C-RNTI d'ordonnancement semi-persistant, de RNTI de canaux PUSCH de commande de puissance de transmission, et de RNTI de canaux PUCCH de commande de puissance de transmission.

13. Dispositif côté réseau, comprenant un module de configuration (91) et un module émetteur-récepteur (92), dans lequel :
le module de configuration (91) est adapté pour configurer, pour un équipement utilisateur réalisant une agrégation de porteuses, des RNTI uniformes ;
le module émetteur-récepteur (92) est adapté pour réaliser une réception de données et une transmission de données avec l'équipement utilisateur en utilisant les RNTI uniformes dans des cellules activées d'une pluralité de cellules aux porteuses agrégées,
dans lequel les RNTI configurées sont différentes des RNTI que le dispositif côté réseau a configurées pour tous les équipements utilisateurs dans la pluralité de cellules avant que l'équipement utilisateur réalise l'agrégation de porteuses, et les RNTI uniformes comprennent au moins un d'un identifiant temporaire de réseau radio cellulaire C-RNTI, d'un C-RNTI d'ordonnancement semi-persistant, de RNTI de canaux PUSCH de commande de puissance de transmission, et de RNTI de canaux PUCCH de commande de puissance de transmission.

14. Dispositif côté réseau selon la revendication 13, dans lequel, la configuration de RNTI uniformes comprend :
le partage de RNTI disponibles entre la pluralité de cellules aux porteuses agrégées.

15. Dispositif côté réseau selon la revendication 13, dans lequel, quand le module de configuration (91) est adapté en outre pour configurer le C-RNTI uniforme, le module de configuration (91) configure, pour l'équipement utilisateur, un même C-RNTI dans des cellules différentes de la pluralité de cellules aux porteuses agrégées, dans lequel le C-RNTI uniforme est différent des RNTI que le côté réseau a configurées pour tous les équipements utilisateurs dans la pluralité de cellules avant que l'équipement utilisateur réalise ;
quand le module de configuration (91) configure le C-RNTI d'ordonnancement semi-persistant uniforme, le module de configuration configure (91), pour l'équipement utilisateur, un même C-RNTI d'ordonnancement semi-persistant dans des cellules différentes de la pluralité de cellules aux porteuses agrégées, dans lequel le C-RNTI d'ordonnancement semi-persistant configuré est différent des RNTI que le côté réseau a configurées pour tous les équipements utilisateurs dans la pluralité de cellules avant que l'équipement utilisateur réalise l'agrégation de porteuses .

16. Dispositif côté réseau selon la revendication 13, dans lequel, quand le module de configuration (91) est adapté en outre pour configurer les RNTI de canaux PUSCH de commande de puissance de transmission uniformes, le module de configuration (91) configure, pour l'équipement utilisateur, un même RNTI de canal PUSCH de commande de puissance de transmission ou différents RNTI de canaux PUSCH de commande de puissance de transmission dans des cellules différentes de la pluralité de cellules aux porteuses agrégées, dans lequel la RNTI de canal PUSCH de commande de puissance de transmission configurée ou les RNTI de canaux PUSCH de commande de puissance de transmission configurées sont différentes des RNTI que le côté réseau a configurées pour tous les équipements utilisateurs dans la pluralité de cellules avant que l'équipement utilisateur réalise l'agrégation de porteuses ;
quand le module de configuration (91) configure les RNTI de canaux PUCCH de commande de puissance de transmission uniformes, le module de configuration (91) configure, pour l'équipement utilisateur, une même RNTI de canal PUCCH de commande de puissance de transmission ou différentes RNTI de canaux PUCCH de commande de puissance de transmission dans des cellules différentes de la pluralité de cellules aux porteuses agrégées, dans lequel la RNTI de canal PUCCH de commande de puissance de transmission configurée ou les RNTI de canaux PUCCH de commande de puissance de transmission configurées sont différentes des RNTI que le côté réseau a configurées pour tous les équipements utilisateurs dans la pluralité de cellules avant que l'équipement utilisateur réalise l'agrégation de porteuses.

17. Dispositif côté réseau selon la revendication 13, dans lequel, le module émetteur-récepteur (92) est utilisé spécifiquement pour :
réaliser une réception de données et une transmission de données avec l'équipement utilisateur en utilisant le même C-RNTI et/ou le même C-RNTI d'ordonnancement semi-persistant dans différentes cellules activées de la pluralité de cellules aux porteuses agrégées.

18. Dispositif côté réseau selon la revendication 13, dans lequel, le module émetteur-récepteur (92) est utilisé spécifiquement pour :
envoyer des informations de commande de puissance à l'équipement utilisateur en utilisant les RNTI de canaux PUSCH de commande de puissance de transmission uniformes et les RNTI de canaux PUCCH de commande de puissance de transmission uniformes dans des cellules activées de la pluralité de cellules aux porteuses agrégées.

19. Dispositif côté réseau selon la revendication 13, dans lequel, lors de la configuration de l'agrégation de porteuses, le module de configuration (91) ne configure plus de nouveaux C-RNTI et/ou de nouveaux C-RNTI d'ordonnancement semi-persistant pour l'équipement utilisateur ; et/ou, lors de la configuration et de l'activation de l'agrégation de porteuses, le module de configuration (91) ne configure plus de nouveaux C-RNTI et/ou de nouveaux C-RNTI d'ordonnancement semi-persistant pour l'équipement utilisateur ; et
le module émetteur-récepteur (92) est utilisé spécifiquement pour : réaliser une réception de données et/ou une transmission de données avec l'équipement utilisateur en utilisant le C-RNTI uniforme et/ou le C-RNTI d'ordonnancement semi-persistant uniforme dans toutes les cellules activées de la pluralité de cellules aux porteuses agrégées.

20. Dispositif côté réseau selon la revendication 13, dans lequel, quand l'équipement utilisateur effectue un transfert d'un nœud source côté réseau à un nœud cible côté réseau, si le dispositif côté réseau est le nœud cible, le dispositif côté réseau est également utilisé pour : envoyer un message de réponse de demande de transfert au nœud source côté réseau, le message de réponse de demande de transfert comprenant les RNTI que le nœud cible côté réseau configure pour l'équipement utilisateur et des informations de fréquence ou des indices d'informations de fréquence d'autres cellules de la pluralité de cellules aux porteuses agrégées ; et
quand l'équipement utilisateur effectue un transfert d'un nœud source côté réseau à un nœud cible côté réseau, si le dispositif côté réseau est le nœud source, le dispositif côté réseau est également utilisé pour : envoyer un message de commande de transfert à l'équipement utilisateur, dans lequel le message de commande de transfert comprend les RNTI que le nœud cible côté réseau configure pour l'équipement utilisateur et les informations de fréquence ou les indices d'informations de fréquence d'autres cellules de la pluralité de cellules dans lesquelles l'agrégation de porteuses est réalisée.

21. Dispositif côté réseau selon la revendication 20, dans lequel le module de configuration (91) est utilisé spécifiquement pour : configurer, pour l'équipement utilisateur, un C-RNTI unique et/ou C-RNTI d'ordonnancement semi-persistant unique.
